# EUROPÄISCHE PATENTSCHRIFT

(11) **EP 3 533 934 B1**
(45) Veröffentlichungstag und Bekanntmachung des Hinweises auf die Patenterteilung: **15.07.2020**
(21) Anmeldenummer: 18159379.9
(22) Anmeldetag: 01.03.2018
(51) Int. Cl.: E02D 17/02, E02D 35/00, E02D 17/18

(54) **BAUVERFAHREN**
CONSTRUCTION METHOD
PROCÉDÉ DE CONSTRUCTION

(43) Veröffentlichungstag der Anmeldung: 04.09.2019
(73) Patentinhaber: BAUER Spezialtiefbau GmbH, 86529 Schrobenhausen (DE)
(72) Erfinder: ZANDTNER, Florian, 85258 Altomünster / Thalhausen (DE); REITER, Michael, 86643 Rennertshofen (DE)
(74) Vertreter: Wunderlich & Heim Patentanwälte Partnerschaftsgesellschaft mbB

(56) Entgegenhaltungen:
- WO-A1-01/04576
- DE-A1-102007 008 881
- US-A1- 2015 276 468

## Beschreibung

Die Erfindung betrifft ein Bauverfahren, bei dem eine Baugrube im Boden erstellt wird und in der Baugrube Gründungselemente an vorgegebenen Arbeitspunkten mit mindestens einem Arbeitsgerät erstellt werden, gemäß dem Oberbegriff des Anspruchs 1. Bei größeren Bauvorhaben werden Baugruben erstellt, in welchen dann zusätzliche Gründungsmaßnahmen durchzuführen sind (wie z.B. aus Dokument DE-A1-102007008881 bekannt). Diese Gründungsmaßnahmen können das Rückverankern von Stützwänden oder Bodenplatten oder auch das Erstellen von Gründungspfählen sein. Für derartige Maßnahmen ist es erforderlich, entsprechendes Arbeitsgerät, etwa Anker- oder Pfahlbohrgeräte, einzubringen. Gleichzeitig müssen häufig weitere Baumaßnahmen innerhalb der Baugrube durchgeführt werden, wobei insbesondere bei innerstädtischen Baustellen die Baugrube auch als Lagerfläche genutzt wird.

Der Erfindung liegt die **Aufgabe** zugrunde, ein Bauverfahren mit der Erstellung einer Baugrube anzugeben, welches besonders effizient durchgeführt werden kann. Die Aufgabe wird nach der Erfindung durch ein Bauverfahren mit den Merkmalen des Anspruchs 1 gelöst. Bevorzugte Ausführungsformen des Bauverfahrens sind in den abhängigen Ansprüchen angegeben.

Das erfindungsgemäße Bauverfahren ist dadurch gekennzeichnet, dass in einer Rechnereinheit die Abmessungen der Baugrube, die Arbeitspunkte und die Abmessungen des mindestens einen Arbeitsgeräts eingegeben werden und dass in der Rechnereinheit automatisch eine benötigte Arbeitsfläche für das mindestens eine Arbeitsgerät und eine Freifläche in der Baugrube ermittelt werden.

Eine Grundidee der Erfindung kann darin gesehen werden, in den beengten Abmessungen einer Baugrube eine Aufteilung der vorhandenen Fläche in eine benötigte Arbeitsfläche und eine Freifläche vorzunehmen. Insbesondere bei der Erstellung von Gründungselementen sind aufwändige Spezialmaschinen notwendig, deren Arbeitseinsatz möglichst effizient geplant werden kann. Dies wird gemäß einem Aspekt der Erfindung dadurch erreicht, dass die Abmessungen des mindestens einen Arbeitsgerätes in einer Rechnereinheit hinterlegt werden. Unter den Abmessungen kann sowohl der Flächenbedarf des Arbeitsgerätes aber auch der notwendige Arbeitsbereich verstanden werden, welcher etwa bei einem Bohrgerät mit schwenkbarem Oberwagen auch den Verschwenkbereich umfassen kann. Abhängig von einer Eingabe zur Größe der Baugrube und den vorgesehenen Arbeitspunkten, an welchen ein Gründungselement mit dem jeweiligen Arbeitsgerät zu erstellen ist, kann so die benötigte Arbeitsfläche ermittelt werden. Hieraus ergibt sich dann auch eine Freifläche in der Baugrube, welche ebenfalls nach der Erfindung von der Rechnereinheit bestimmt wird. Diese Freifläche kann dann ohne Störung des Arbeitsablaufes für das Erstellen der Gründungselemente in einer gewünschten Weise genutzt werden, etwa zum Ablegen von Werkzeugen, Geräten, Arbeitsmaterialien oder sonstigem Lagermaterial. Es kann eine Datenbank vorgesehen sein, in welcher die Daten zu möglichen Arbeitsgeräten gespeichert und hinterlegt sind. Ein Bediener kann dann die benötigten Daten durch einfache Auswahl des oder der Arbeitsgeräte abrufen.

Eine bevorzugte Weiterbildung des erfindungsgemäßen Verfahrens besteht darin, dass als Arbeitsgerät ein Pfahlbohrgerät, ein Ankerbohrgerät und/oder ein Schlitzwandgerät eingesetzt werden kann. Ein Pfahlbohrgerät wird insbesondere zum Erstellen vertikaler Gründungspfähle benötigt. Mit einem Ankerbohrgerät können insbesondere Zuganker für eine Rückverankerung von Stützwänden der Baugrube eingebracht werden. Es können auch Injektionsbohrgeräte vorgesehen werden, um beispielsweise im Boden eine Boden- oder Dichtplatte durch Injizieren einer entsprechenden Suspension zu bewirken. Als Schlitzwandgerät kann insbesondere ein Schlitzwandgreifer oder eine Schlitzwandfräse zum Erstellen einer Schlitzwand eingesetzt werden. Es können aber auch andere Spezialtiefbaugeräte zum Einsatz kommen.

Ein Gründungselement im Sinne der Erfindung ist weit zu verstehen, wobei jedes Element, welches zum Bilden der Baugrube oder in der Baugrube hergestellt wird, ein solches Gründungselement ist. Dabei ist nach einer Weiterbildung der Erfindung besonders bevorzugt, dass als Gründungselement ein Gründungspfahl, ein Zuganker, ein Injektionsanker und/oder eine Schlitzwand erstellt wird. Grundsätzlich können auch andere Gründungselemente nach Bedarf in der Baugrube hergestellt werden, so etwa eine Spundwand, eine Bodenmischwand, HDI-Elemente etc.

Eine besonders bevorzugte Verfahrensvariante der Erfindung besteht darin, dass zu den ermittelten Flächen festgelegt wird, welcher Teil als Fahrweg oder Lagerfläche vorgesehen ist. Dabei kann der Fahrweg abhängig vom Arbeitsverlauf sowohl ein Teil der Arbeitsfläche als auch ein Teil der Freifläche sein. Hingegen wird durch die Rechnereinheit eine Lagerfläche insbesondere dann ermittelt und festgelegt, wenn diese weder als Arbeitsfläche zum Erstellen eines Gründungselementes noch zum Verfahren des mindestens einen Arbeitsgerätes benötigt wird.

Ein weiteres vorteilhaftes Verfahren besteht nach einer Weiterentwicklung darin, dass eine Anzeigeeinrichtung vorgesehen wird, mit welcher in der Baugrube die Arbeitsfläche und/oder die Freifläche angezeigt wird. Mit der Anzeigeeinrichtung kann dabei insbesondere unmittelbar auf den Boden der Baugrube eine Trennlinie angezeigt werden, welche Arbeitsfläche und Freifläche voneinander trennt.

Dies kann in bevorzugter Weise dadurch erfolgen, dass die Anzeigeeinrichtung ein optisches Projezierelement, insbesondere einem Laser umfasst. Mit einer derartigen Anzeigeeinrichtung, welche an einem erhöhten Punkt an der Baugrube, etwa am Mast eines Arbeitsgerätes, einer Erhöhung am Baugrubenrand oder an einer Flugdrohne angebracht ist, kann so ein Bereich vorangezeigt werden. Diese optische Markierung kann dann von Arbeitspersonal mittels Farbe als eine dauerhafte Markierung am Grund der Baugrube nachgezeichnet werden. Die Anzeigeeinrichtung wird vorzugsweise über eine drahtlose Verbindung von der Rechnereinheit gesteuert.

Eine weitere bevorzugte Verfahrensvariante kann darin gesehen werden, dass in die Rechnereinheit eine Arbeitsabfolge eingebbar oder durch die Rechnereinheit vorgegeben wird und dass durch die Rechnereinheit eine Änderung der Arbeits- und Freiflächen über die Zeit ermittelt wird. So kann etwa nach dem Erstellen der ersten Gründungselemente die vorgesehene Arbeitsfläche in eine Freifläche geändert werden. Entsprechend können auch zunächst anfänglich vorgesehene Freiflächen abhängig vom zeitlichen Arbeitsablauf ab einem bestimmten Zeitpunkt dann zu einer Arbeitsfläche umklassifiziert werden.

Die Erfindung ist weiterhin in bevorzugter Weise dadurch weitergebildet, dass durch die Rechnereinheit eine Belegung der Freiflächen ermittelt wird. Abhängig von einer Eingabe des Aufbaus oder der Arbeitsabfolge in der Baugrube kann durch die Rechnereinheit eine Belegung der Freiflächen mit Arbeitsgeräten, Werkzeugen und/oder Arbeitsmaterialien bestimmt und die Belegung entsprechend vorgeschlagen werden. Dabei kann durch die Rechnereinheit die Belegung anhand vorgegebener Parameter, wie Zeitdaten zum Materialbedarf oder zum Arbeitseinsatz bestimmt werden, welche Geräte, Werkzeuge oder Materialien an welcher Position und über welchen Zeitraum zu lagern sind. Hierdurch kann der Arbeitsablauf innerhalb der Baugrube und die Platz- und Raumnutzung noch effizienter erfolgen.

Eine weitere vorteilhafte Verfahrensvariante besteht zudem darin, dass das mindestens eine Arbeitsgerät mit einer Datenübertragungseinrichtung versehen ist, über welche das Arbeitsgerät aktuelle Daten zum Arbeitsgerät, zum Standort und/oder zum Bearbeitungsvorgang an die Rechnereinheit übermittelt. In der Rechnereinheit kann dabei überprüft werden, ob das tatsächlich eingesetzte Arbeitsgerät mit dem vorgesehenen Arbeitsgerät übereinstimmt, oder ob eine Abweichung vorliegt, die eine Auswirkung auf die Flächenaufteilung, insbesondere hinsichtlich Arbeits- und Freifläche hat. Auch kann durch die zentrale Rechnereinheit dem Bediener in dem Arbeitsgerät die nächste anstehende Arbeitsaufgabe und ein Verfahrweg hierzu angezeigt werden. Bei Arbeitsgeräten mit einer automatischen oder auch fahrerlosen Fahreinrichtung kann die zentrale Rechnereinheit auch unmittelbar Fahranweisungen an das Arbeitsgerät über die vorzugsweise drahtlose Datenverbindung übermitteln.

Weiterhin ist es nach einer Ausführungsform der Erfindung bevorzugt, dass mittels einer Erfassungseinrichtung ein Ist-Zustand der Baugrube erfasst wird und durch die Rechnereinheit eine Überprüfung von Ist- und Soll-Zustand durchgeführt wird. Hierdurch kann ein besonders sicherer Arbeitsablauf in einer Baugrube durchgeführt werden.

Besonders vorteilhaft ist es dabei, dass als Erfassungseinrichtung mindestens eine Kamera vorgesehen ist. Die Kamera ist dabei vorzugsweise an einem erhöhten Punkt an der Baugrube oder an einer Flugdrohne oder vorzugsweise an einem Arbeitsgerät, insbesondere einem Mast eines Arbeitsgeräts, angebracht. Es können auch mehrere Kameras vorgesehen sein, durch welche die tatsächliche aktuelle Lage von Arbeitsgeräten, Materialien und auch von Freiflächen und Arbeitswegen als Ist-Zustand erfasst werden. Über eine entsprechende Software kann so der Ist-Zustand mit einem Soll-Zustand in der Rechnereinheit abgeglichen werden. In der Rechnereinheit können insbesondere auch Anweisungen an Arbeitsgeräte und deren Bediener oder auch Warnhinweise übermittelt werden, wenn etwa durch die Erfassungseinrichtung Gegenstände im Arbeitsbereich oder in Fahrwegen ermittelt werden.

Eine weitere bevorzugte Ausgestaltung der Erfindung kann darin gesehen werden, dass durch die Rechnereinheit Transporteinrichtungen zum Zu- und Abführen von Material zu den Arbeits- oder Lagerflächen gesteuert werden. Die Transporteinrichtungen können insbesondere Kräne oder Transportfahrzeuge sein. Die Steuerung kann dabei unmittelbar erfolgen, soweit die Transporteinrichtungen für ein automatisches Steuern und Bewegen vorgesehen sind. Es kann jedoch auch eine indirekte Steuerung dadurch erfolgen, dass einem Bediener der entsprechenden Transporteinrichtung Handlungsanweisungen zum Verfahren der entsprechenden Transporteinrichtung gegeben werden.

## Patentansprüche

1. Bauverfahren, bei dem
- eine Baugrube im Boden erstellt wird und
- in der Baugrube Gründungselemente an vorgegebenen Arbeitspunkten mit mindestens einem Arbeitsgerät erstellt werden,
**dadurch gekennzeichnet,**
- **dass** in einer Rechnereinheit die Abmessungen der Baugrube, die Arbeitspunkte und die Abmessungen des mindestens einen Arbeitsgeräts eingegeben werden und
- **dass** in der Rechnereinheit automatisch eine benötigte Arbeitsfläche für das mindestens eine Arbeitsgerät und eine Freifläche in der Baugrube ermittelt werden.

2. Bauverfahren nach Anspruch 1,
**dadurch gekennzeichnet,**
**dass** als Arbeitsgerät ein Pfahlbohrgerät, ein Ankerbohrgerät und/oder ein Schlitzwandgerät eingesetzt wird.

3. Bauverfahren nach einem der Ansprüche 1 oder 2,
**dadurch gekennzeichnet,**
**dass** als Gründungselement ein Gründungspfahl, ein Zuganker, ein Injektionsanker und/oder eine Schlitzwand erstellt wird.

4. Bauverfahren nach einem der Ansprüche 1 bis 3,
**dadurch gekennzeichnet,**
**dass** zu ermittelten Flächen festgelegt wird, welcher Teil als Fahrweg oder Lagerfläche vorgesehen ist.

5. Bauverfahren nach einem der Ansprüche 1 bis 4,
**dadurch gekennzeichnet ,**
**dass** eine Anzeigeeinrichtung vorgesehen wird, mit welcher in der Baugrube die Arbeitsfläche und/oder die Freifläche angezeigt wird.

6. Bauverfahren nach Anspruch 5,
**dadurch gekennzeichnet ,**
**dass** die Anzeigeeinrichtung ein optisches Projezierelement, insbesondere einen Laser umfasst.

7. Bauverfahren nach einem der Ansprüche 1 bis 6,
**dadurch gekennzeichnet ,**
**dass** in die Rechnereinheit eine Arbeitsabfolge eingebbar oder durch die Rechnereinheit vorgegeben wird und
**dass** durch die Rechnereinheit eine Änderung der Arbeits- und Freiflächen über die Zeit ermittelt wird.

8. Bauverfahren nach einem der Ansprüche 1 bis 7,
**dadurch gekennzeichnet ,**
**dass** durch die Rechnereinheit eine Belegung der Freiflächen ermittelt wird.

9. Bauverfahren nach einem der Ansprüche 1 bis 8,
**dadurch gekennzeichnet ,**
**dass** das mindestens eine Arbeitsgerät mit einer Datenübertragungseinrichtung versehen ist, über welche das Arbeitsgerät aktuelle Daten zum Arbeitsgerät, zum Standort und/oder zum Bearbeitungsvorgang an die Rechnereinheit übermittelt.

10. Bauverfahren nach einem der Ansprüche 1 bis 9,
**dadurch gekennzeichnet ,**
**dass** mittels einer Erfassungseinrichtung ein Ist-Zustand der Baugrube erfasst wird und durch die Rechnereinheit eine Überprüfung von Ist- und Sollzustand durchgeführt wird.

11. Bauverfahren nach Anspruch 10,
**dadurch gekennzeichnet ,**
**dass** als Erfassungseinrichtung mindestens eine Kamera vorgesehen wird.

12. Bauverfahren nach einem der Ansprüche 1 bis 11,
**dadurch gekennzeichnet ,**
**dass** durch die Rechnereinheit Transporteinrichtungen zum Zu- und Abführen von Material zu den Arbeits-/ oder Lagerflächen gesteuert werden.

## Claims

1. Construction method, in which
- an excavation pit is produced in the ground and
- in the excavation pit foundation elements are produced at predetermined working points with at least one working apparatus,
**characterized in that**
- in a computer unit the dimensions of the excavation pit, the working points and the dimensions of the at least one working apparatus are entered and
- **in that** in the computer unit a required workspace for the at least one working apparatus and an open space in the excavation pit are determined automatically.

2. Construction method according to claim 1,
**characterized in that**
as working apparatus a pile drilling apparatus, an anchor drilling apparatus and/or a diaphragm wall apparatus is used.

3. Construction method according to any one of claims 1 or 2,
**characterized in that**
as foundation element a foundation pile, a tension anchor, an injection anchor and/or a diaphragm wall is produced.

4. Construction method according to any one of claims 1 to 3,
**characterized in that**
for the determined spaces it is specified which part is provided as driveway or storage space.

5. Construction method according to any one of claims 1 to 4,
**characterized in that**
a display means is provided, with which the workspace and/or the open space in the excavation pit is displayed.

6. Construction method according to claim 5,
**characterized in that**
the display means comprises an optical projection element, in particular a laser.

7. Construction method according to any one of claims 1 to 6,
**characterized in that**
a working sequence can be entered into the computer unit or is predetermined by the computer unit and
**in that** by the computer unit a change of the work- and open spaces is determined over time.

8. Construction method according to any one of claims 1 to 7,
**characterized in that**
by the computer unit an occupancy of the open spaces is determined.

9. Construction method according to any one of claims 1 to 8,
**characterized in that**
the at least one working apparatus is provided with a data transmission means, via which the working apparatus transmits current data regarding the working apparatus, the location and/or the processing operation to the computer unit.

10. Construction method according to any one of claims 1 to 9,
**characterized in that**
by means of a detection means an actual state of the excavation pit is detected and by the computer unit a verification of actual and target state is carried out.

11. Construction method according to claim 10,
**characterized in that**
as detection means at least one camera is provided.

12. Construction method according to any one of claims 1 to 11,
**characterized in that**
by the computer unit transport means for the supply and discharge of material to the work- or storage spaces are controlled.

## Revendications

1. Procédé de construction, dans lequel
- une fouille est réalisée dans le sol et
- des éléments de fondation sont réalisés dans la fouille au niveau de points de travail prédéfinis avec au moins un engin de travail,
**caractérisé en ce que**
- les dimensions de la fouille, les points de travail et les dimensions de l'au moins un engin de travail sont saisis dans une unité de calcul et
- **en ce qu'**une surface de travail nécessaire pour l'au moins un engin de travail et une surface libre dans la fouille sont déterminées automatiquement dans l'unité de calcul.

2. Procédé de construction selon la revendication 1,
**caractérisé en ce que**
un appareil de forage de pieu, un appareil de forage d'ancrage et/ou un appareil de paroi moulée est utilisé en tant qu'engin de travail.

3. Procédé de construction selon l'une des revendications 1 ou 2,
**caractérisé en ce que**
un pieu de fondation, un tirant d'ancrage, un ancrage d'injection et/ou une paroi moulée est réalisé(e) en tant qu'élément de fondation.

4. Procédé de construction selon l'une des revendications 1 à 3,
**caractérisé en ce que**
des surfaces à déterminer sont fixées, laquelle partie est prévue en tant que route ou surface de stockage.

5. Procédé de construction selon l'une des revendications 1 à 4,
**caractérisé en ce que**
un dispositif d'affichage est prévu, avec lequel la surface de travail et/ou la surface libre est affichée dans la fouille.

6. Procédé de construction selon la revendication 5,
**caractérisé en ce que**
le dispositif d'affichage comprend un élément de projection optique, en particulier un laser.

7. Procédé de construction selon l'une des revendications 1 à 6,
**caractérisé en ce que**
une séquence de travail peut être saisie dans l'unité de calcul ou est prédéfinie par l'unité de calcul et
**en ce qu'**une modification au cours du temps des surfaces de travail et libres est déterminée par l'unité de calcul.

8. Procédé de construction selon l'une des revendications 1 à 7,
**caractérisé en ce que**
une occupation des surfaces libres est déterminée par l'unité de calcul.

9. Procédé de construction selon l'une des revendications 1 à 8,
**caractérisé en ce que**
l'au moins un engin de travail est doté d'un dispositif de transmission de données, par le biais duquel l'engin de travail transmet des données actuelles à l'engin de travail, au site et/ou à l'unité de calcul en vue d'une opération de traitement.

10. Procédé de construction selon l'une des revendications 1 à 9,
**caractérisé en ce que**
un état réel de la fouille est détecté au moyen d'un dispositif de détection et une vérification de l'état réel et de consigne est effectuée par l'unité de calcul.

11. Procédé de construction selon la revendication 10,
**caractérisé en ce que**
au moins une caméra est prévue en tant que dispositif de détection.

12. Procédé de construction selon l'une quelconque des revendications 1 à 11,
**caractérisé en ce que**
des dispositifs de transport pour l'amenée et l'évacuation de matériau aux surfaces de travail et/ou de stockage sont commandés par l'unité de calcul.
